# DEMANDE DE BREVET EUROPEEN

(11) **EP 0 618 132 A1**
(43) Date de publication de la demande: **05.10.1994**
(21) Numéro de dépôt: 93480014.5
(22) Date de dépôt: 26.02.1993
(51) Int. Cl.: B63C 11/22, B63C 11/12

(54) **Système d'alarme de pression d'air faible pour les plongeurs en scaphandre autonome**

(71) Demandeur: UNDER SEA INDUSTRIES, Inc., Rancho Dominguez, California 90221 (US)
(72) Inventeur: Toth, Douglas, Huntington Beach, California 92646 (US); Shankle, Steven J., Redmond, Washington 98052 (US); Brooks, Eric R., Mukilteo, Washington 98275 (US)
(74) Mandataire: Hautier, Jean-Louis

(57) **Abrégé**

L'invention concerne un système d'alarme en cas de pression d'air basse, pour les plongeurs en scaphandre autonome (10).

Un contact manométrique et un émetteur électromagnétique sont disposés sur la bouteille d'air (12) comprimé du plongeur en scaphandre autonome (10), ou à proximité de celle-ci, et un récepteur électro-magnétique (24) correspondant est disposé sur le masque (18) du plongeur, ledit récepteur (24) comprenant une paire de diodes luminescentes de deux couleurs différentes qui clignotent à des fréquences également différentes, selon l'état où se trouve le contact manométrique (20), qui dépend de la quantité d'air qui se trouve dans la bouteille d'air (12) du plongeur.

Application à la pratique de la plongée sous-marine.

## Description

La présente invention est en rapport avec les équipements pour les plongeurs en scaphandre autonomes, d'une manière générale, et plus particulièrement avec ceux qui utilisent un système d'alarme de pression d'air faible qui réagit à la pression mesurée dans la bouteille d'air comprimé du plongeur et qui assure une indication visuelle, face au masque du plongeur, de la pression de l'air dans la bouteille, suffisante ou dangereusement basse, dispensant ainsi le plongeur de toute intervention consciente qui pourrait être nécessaire pour déterminer l'état de son alimentation en air au cours de la plongée.

Même les scaphandriers autonomes les mieux équipés peuvent se trouver engagés dans des opérations de travail ou d'observation alors qu'ils n'ont pas vérifié l'indication du manomètre indiquant la pression de l'air dans la bouteille, avec une réserve d'air insuffisante pour assurer la sécurité lors de la remontée à la surface. La présente invention est conçue pour éliminer ce risque en munissant le masque du plongeur d'une indication visuelle de l'insuffisance de pression, ceci d'une manière telle que le plongeur ne puisse pas ne pas être conscient du niveau de la pression d'air à l'intérieur de la bouteille.

L'une des principales caractéristiques de la présente invention réside dans l'utilisation d'une transmission sans fil, entre un émetteur disposé sur ou à proximité de la bouteille d'alimentation en air sous pression et un récepteur disposé sur le masque du plongeur, ce qui évite l'utilisation de fils ou câbles de liaison susceptibles de perturber les activités du plongeur et de constituer ainsi une source de risque supplémentaire. Outre cette liaison sans fil, qui n'est pas exposée aux risques de coupure, dans les conditions défavorables normalement rencontrées au cours des plongées, le système d'alarme préféré doit être sûr, fiable, peu coûteux et tout cela avec une faible consommation d'énergie ; il doit comporter un système d'affichage simple, disposé bien en vue pour le plongeur et il ne doit pas engendrer d'interférences avec des appareillages analogues fonctionnant en deça des distances normalement observées entre des plongeurs autonomes opérant en équipe. De plus, du point de vue de la commercialisation, il faudrait que le système fonctionne aussi bien dans le magasin d'articles de plongée que dans l'eau, pour permettre des démonstrations faciles par le personnel de vente.

Il existe un certain nombre de brevets américains déjà délivrés, qui sont en rapport avec l'objet de la présente invention, c'est ainsi, par exemple, que le brevet US-A-3.712.714, concerne un système d'affichage d'informations, prévu pour être utilisé avec un masque de plongée. Le système assure l'affichage d'un certain nombre d'indications d'état adaptées pour être visibles dans le champ de vision du scaphandrier. Des indications telles que la pression dans la bouteille figurent parmi celles qui pourraient être affichées.

Malheureusement, les affichages mentionnés dans ce brevet sont de nature analogique, identiques à ceux qui sont couramment utilisés, au moyen, par exemple, d'appareils de mesure fixés au poignet du scaphandrier. La seule particularité distinctive de ce dispositif, selon l'état antérieur de la technique, réside dans le fait que les affichages normalement utilisés sont disposés dans le masque de plongée. On n'y trouve cependant aucun débat sur la manière dont l'information est élaborée ou transmise à l'affichage dans le masque, pas plus que sur le remède aux préoccupations précitées avec d'autres fonctions au cours de la plongée, remède nécessaire qui devrait alerter le plongeur, le prévenir que la réserve d'air est descendue à un niveau dangereusement bas, lui signalant la nécessité immédiate de commencer une remontée vers la surface.

Le brevet US-A-3.119.990 concerne un système d'alarme surveillant la pression, pour un équipement de plongée en scaphandre autonome. Une lampe peut être associée au masque de plongée pour signaler une situation de pression basse. La liaison entre le capteur de pression et l'indicateur est réalisée avec une paire de conducteurs, par opposition à une liaison sans fil. Ce brevet décrit par conséquent l'utilisation d'un dispositif qui remédie à certaines insuffisances du brevet précité pour ce qui concerne la visualisation de la situation en pression basse. Il ne remédie pas cependant à l'inconvénient précité de l'utilisation d'une connexion matérialisée par un fil conducteur, susceptible de perturber certaines activités, en plongée, et de constituer ainsi un risque supplémentaire.

Le brevet US-A-4.360.253 traite d'un indicateur de résultat de contrôle monté sur un verre de sécurité de l'opérateur. Cette invention prévoit l'utilisation d'une diode luminescente montée sur une protection oculaire transparente, dans le champ de vision de l'utilisateur, pour indiquer une position d'état. Cependant, là encore, on utilise un câblage entre le capteur et l'affichage de l'état surveillé.

Le brevet US-A-3.587.038concerne une balise de guidage ultrasonique et un équipement de communication pour nageurs sous-marins. Ce système utilise des émetteurs ultrasoniques comme moyens de communication pour des applications sous-marines.

Le brevet US-A-4.757.714 décrit un capteur de vitesse et un système d'affichage, porté sur la tête, pour les données élaborées à partir dudit capteur. Dans ce brevet, on voit un masque pour plongeur à scaphandre autonome avec un système d'affichage incorporé pour des informations telles que la profondeur, la pression et l'état de la réserve d'air. La réalisation préférée qui y est illustrée est prévue initialement pour des skieurs et assure un affichage visuel qui permet aux skieurs d'observer la vitesse de déplacement par rapport à la surface porteuse, mesurée au moyen d'un dispositif à effet Doppler. La réalisation préférée est illustrée avec un câblage entre l'élément capteur et l'affichage, mais on y fait allusion, en termes généraux, à la possibilité d'utiliser un système de transmission sans fil utilisant l'énergie électromagnétique.

Malheureusement, ce brevet n'explique pas de quelle manière pourrait être utilisé, dans la pratique, un système de transmission électromagnétique convenable pour des applications subaquatiques, ainsi qu'on l'a déjà mentionné ci-dessus, l'utilisation d'un câble pour l'interconnexion de l'élément capteur et du système d'affichage serait susceptible de perturber les activités en plongée et de présenter, pour le plongeur en scaphandre autonome, un risque qui pourrait être aussi sérieux que celui que l'on cherche à éviter avec la présente invention.

Le brevet US-A-4.800.373 concerne un dispositif d'alarme pression basse, pour les plongeurs en scaphandre autonome, dans lequel le dispositif est fixé à un raccord prévu sur la partie haute pression de la bouteille d'air comprimé et fournit aussi bien des indications auditives que des indications visuelles, selon un programme à deux étages, signalant un premier état de pression satisfaisante et un deuxième état de pression dangereusement basse. Malheureusement, ce brevet prévoit lui aussi l'utilisation d'un câblage pour l'interconnexion entre les capteurs détecteurs de la baisse de pression et les dispositifs d'alarme, rendant ainsi ce système inutilisable pour des plongeurs en scaphandre autonome, pour des raisons de sécurité, ainsi qu'on l'a décrit précédemment.

Ainsi, il existe toujours la nécessité de trouver un système d'alarme, en cas de baisse de pression, qui soit pratique, sûr, peu coûteux et fiable, fournissant une indication visuelle qui ne peut pas être ignorée par un scaphandrier autonome lorsque la pression est devenue dangereusement basse. Il faudrait en outre que ledit système ne nécessite pas l'utilisation d'un câblage pour l'interconnexion entre le capteur et l'affichage visuel, câblage susceptible de perturber les activités en plongée, de constituer un risque non négligeable du point de vue de la sécurité et d'affecter aussi la fiabilité. La fiabilité est un facteur particulièrement important dans un système auquel le scaphandrier devra s'habituer pour que ledit système lui indique le moment où il doit commencer à remonter avec la pression d'air encore disponible et qui doit être au moins suffisante pour permettre d'atteindre la surface en toute sécurité, avant que la réserve d'air ait été complètement épuisée.

La présente invention fait face aux exigences précitées en fournissant un système d'alarme pression d'air basse pour les plongeurs en scaphandre autonome, qui élimine les défauts énumérés ci-dessus de l'état antérieur de la technique.

Plus précisément, la présente invention procure un système d'alarme pression d'air basse extrêmement fiable et peu coûteux, utilisant la transmission électromagnétique à partir d'un émetteur installé à proximité de la bouteille d'alimentation en air et couplé à un capteur manométrique qui est monté directement du côté haute pression de la valve de la bouteille d'air. Un récepteur indépendant est monté directement sur le masque facial du plongeur et il fait corps avec des moyens d'affichages visuels réalisés sous la forme de diodes luminescentes de différentes couleurs et fonctionnant avec des rythmes de cadencement différents. L'un de ces couples couleur-cadence fournit au plongeur l'information visuelle que la réserve d'air, dans la bouteille d'alimentation, est à un niveau satisfaisant, tandis que l'autre couple couleur-cadence signale au plongeur que la réserve d'air a baissé en dessous d'une valeur de seuil prédéterminée.

L'émetteur selon la présente invention utilise un oscillateur de précision travaillant à 250 kilohertz (kHz) qui fournit ainsi la fréquence porteuse. Celle-ci est appliquée également à un diviseur de fréquence qui élabore, en sortie, deux audiofréquences de modulation, à savoir 7,8 kHz et 3,9 kHz.

Modulée par l'audiofréquence de 7,8 kHz, ladite fréquence porteuse de 250 kHz transmet un signal correspondant à la couleur rouge, prévue pour indiquer que la pression est basse ; modulée à 3,9 kHz, elle transmet un signal correspondant à la couleur verte, prévue pour indiquer une pression adéquate. Les deux signaux couleur-fréquence sont appliqués à un sélecteur d'audiofréquence qui détermine les périodes d'activité respectives des deux audiofréquences en choisissant l'une ou l'autre de celles-ci, selon la pression qui agit sur un contact manométrique. Le signal porteur à 250 kHz est alors modulé par l'audiofréquence présente à la sortie dudit sélecteur.

La fréquence porteuse modulée passe par un circuit conformateur, puis à travers un étage de sortie qui entraîne un circuit inductance/capacité ou circuit résonnant parallèle.

Une partie infime du champ magnétique variable de l'émetteur est captée par l'antenne inductive à ferrite du récepteur, provoquant le passage d'un courant à travers les enroulements de l'inducteur. Les enroulements de l'inducteur font partie d'un circuit résonnant parallèle qui engendre un signal en tension, qui est appliqué à la grille d'un transistor à effet de champ constituant le premier étage d'un amplificateur d'entrée. Lorsque le signal a été suffisamment amplifié, il est appliqué à un détecteur bouclé à verrouillage de phase pour éliminer la fréquence porteuse et délivrer, en sortie, l'une ou l'autre des deux audiofréquences détectées. L'audiofréquence détectée est alors prise en charge et appliquée simultanément à deux décodeurs, des tonalités correspondant respectivement aux couleurs rouge et verte. Lorsque l'un desdits décodeurs identifie l'audiofréquence sur laquelle il est accordé, il ferme le circuit de la diode luminescente de couleur appropriée, qui est montée sur la face frontale du masque de plongée, afin d'assurer une signalisation bien claire, du fait de sa couleur et de son rythme de clignotement, de l'état de la réserve d'air qui se trouve dans la bouteille d'air du plongeur.

On pourra voir, dans les pages qui suivent, que le système d'alarme selon la présente invention satisfait à toutes les exigences énumérées ci-dessus pour ce qui concerne la sécurité, la fiabilité, le faible coût, la faible consommation d'énergie, la non perturbation par des systèmes analogues utilisés par des plongeurs opérant dans le voisinage, un système d'affichage simple et la possibilité d'un appareil de démonstration simple, pour des utilisations promotionnelles et, particularité des plus importantes, grâce à la liaison sans fil qui ne risque pas d'être interrompue du fait des conditions défavorables auxquelles on se heurte couramment en cours de plongée.

C'est donc un objet principal de la présente invention que de fournir un système d'alarme en cas de baisse de la pression d'air, à l'usage des plongeurs en scaphandre autonome, dans lequel une liaison de communication sans fil procure des indications facilement observables dans le masque facial du plongeur, de l'état de la réserve d'air sous pression du plongeur, d'une manière telle qu'il soit vraiment impossible que ces indications soient ignorées du plongeur et qu'elles ne nécessitent pas d'interprétation de quelque donnée telle que celle qui est fournie habituellement sous la forme d'une indication analogique du niveau de pression.

Un autre objet de la présente invention est de fournir un système d'alarme en cas de baisse de la pression d'air, à l'usage des plongeurs en scaphandre autonome avec lequel, dans le masque facial du plongeur, deux indications visuelles sont prévues dont l'une donne au plongeur la certitude que l'état de sa réserve d'air sous pression est satisfaisant, tandis que l'autre signale, clairement et immédiatement, que la pression d'air est tombée en dessous d'une valeur de seuil prédéterminée et qu'il faut remonter immédiatement à la surface.

Un autre objet de la présente invention est aussi de fournir un système d'alarme en cas de baisse de la pression d'air, à l'usage des plongeurs en scaphandre autonome, qui utilise une liaison électromagnétique sans fil entre un capteur sensible à la pression et un système indicateur associé au masque facial, ladite liaison sans fil étant réalisée sous la forme d'une transmission par induction magnétique, adéquate pour couvrir la distance entre un émetteur et un récepteur montés respectivement sur la bouteille du plongeur et le masque facial, tout en minimisant le risque de perturbation par d'autres sources d'énergie magnétique, par exemple par d'autres plongeurs opérant dans le voisinage et utilisant un système similaire pour signaler une baisse de la pression d'air.

Un autre objet encore de la présente invention, est de fournir, pour la pratique de la plongée en scaphandre autonome, un système d'alarme en cas de pression basse qui fonctionne avec une liaison sans fil, avec lequel le plongeur dispose de deux indications visuelles, l'une indiquant un état adéquat de la réserve d'air, l'autre un état potentiellement inadéquat de ladite réserve, les deux indications étant différenciées par leurs couleurs et leurs rythmes de clignotement respectifs.

Les objets et les avantages précités de la présente invention, ainsi que les objets et avantages secondaires de celle-ci, vont apparaître plus clairement ci-dessous, à la lecture de la description détaillée d'une réalisation préférée, avec les dessins ci-dessous dans lesquels :
La figure 1 représente un plongeur en scaphandre autonome utilisant le système d'alarme en cas de pression d'air insuffisante, selon la présente invention.
La figure 2 est une représentation, à plus grande échelle, de la bouteille d'air du plongeur, avec le transducteur manométrique et l'émetteur, selon la présente invention.
La figure 3 est une vue en coupe, agrandie, d'un interrupteur manométrique pouvant être utilisé dans la présente invention.
La figure 4 est une vue en coupe, partielle, de la structure mécanique de la partie émetteur de la présente invention.
La figure 5 est une représentation isométrique du masque facial d'un plongeur en scaphandre autonome, représenté avec le récepteur et l'indicateur visuel qui sont montés dessus.
La figure 6, comprenant les figures 6a et 6b, est une représentation schématique de l'émetteur de la présente invention et :
La figure 7, comprenant les figures 7a et 7b, est une représentation schématique du récepteur de la présente invention.

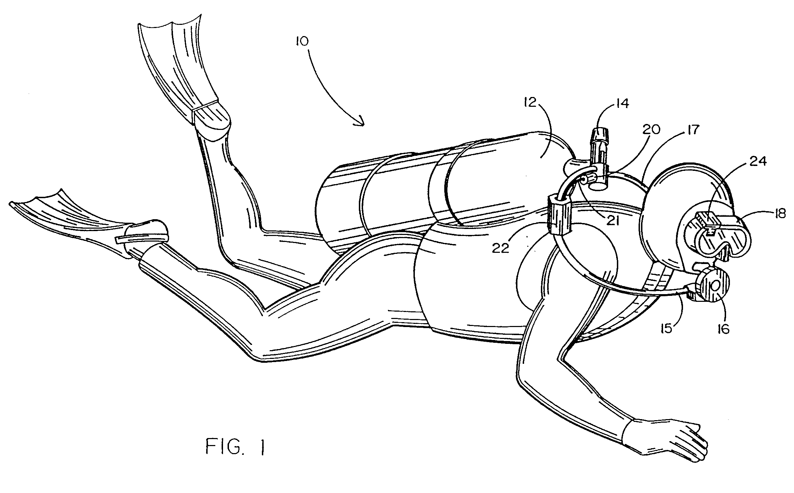

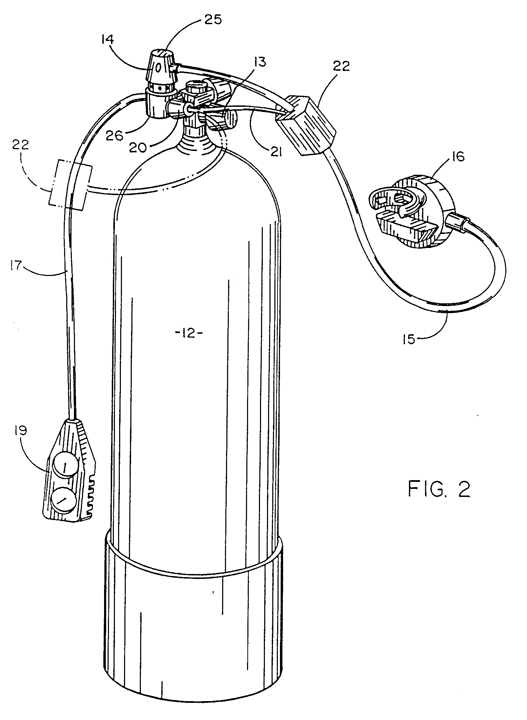

En se référant maintenant à la figure 1, on peut y voir la représentation d'un plongeur en scaphandre autonome 10, utilisant en tant qu'équipement normal de plongeur autonome, un réservoir ou bouteille d'alimentation en air 12 auquel sont connectés un premier étage régulateur de pression 14 et un tuyau flexible 15 reliant ledit premier étage régulateur à un deuxième étage régulateur 16. A ce premier étage régulateur de pression 14, est également connecté un tuyau flexible à haute pression 17 qui est normalement connecté à un ensemble d'appareils de mesure, tel que l'ensemble d'appareils de mesure 19 représenté dans la figure 2 et qui est normalement porté sur le poignet du plongeur ou sur son avant-bras. Ainsi qu'on peut le voir également dans la figure 1, le plongeur en scaphandre autonome 10 porte aussi un masque de plongée 18. Les appareils précités, à savoir la bouteille 12, les régulateurs 14 et 16, les tuyaux flexibles 15 et 17, le masque 18 et l'ensemble d'appareils de mesure 19 font tous partie d'un équipement relativement classique de plongée en scaphandre autonome. Cependant, également représentés dans la figure 1, il y a aussi un contact manométrique 20, qui est connecté par un câble 21 à un émetteur 22, et un récepteur 24 qui est monté sur le masque 18 du plongeur.

En se référant maintenant à la figure 2, on peut voir que le réservoir ou bouteille d'alimentation 12 est muni d'un robinet 13 et d'un premier étage régulateur de pression 14, ce dernier ayant un orifice basse pression 25 et un orifice haute pression 26. A l'une de ses extrémités, est relié le tuyau flexible 15 à l'orifice basse pression 25 et, par son autre extrémité, au deuxième étage régulateur 16. Le contact manométrique 20 est connecté, par l'une de ses extrémités, à l'orifice haute pression 26, afin de réagir aux variations de la pression à l'intérieur du réservoir 12. Le contact manométrique 20 est également connecté, au moyen d'un câble 21, à l'émetteur 22. Ainsi qu'on le voit dans la figure 2, l'émetteur 22 est monté de préférence le long du tuyau 15. Ceci est simplement un moyen commode pour placer l'émetteur 22 à faible distance du réservoir 12, mais en un point suffisamment éloigné du robinet 13 de la bouteille pour éviter une perturbation éventuelle de l'émission par induction magnétique de l'émetteur 22.

Le même résultat peut être obtenu en disposant l'émetteur 22 le long du tuyau flexible à haute pression 17, ainsi qu'on l'a esquissé en trait mixte dans la figure 2, avec l'émetteur qui est simplement esquissé portant le même numéro de référence 22. Ainsi qu'on l'a déjà indiqué précédemment, le tuyau souple à haute pression 17 relie le robinet 13 de la bouteille à l'ensemble d'appareils de mesure 19 sur lequel s'affichent, normalement sous forme analogique, les indications des données importantes pour la plongée, telles que la pression d'air et la profondeur.

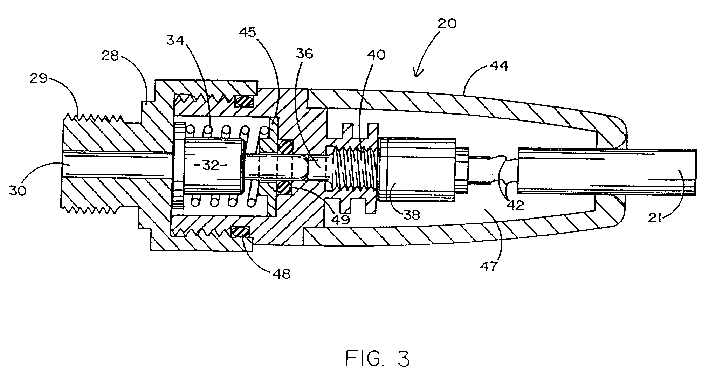

On peut décrire plus en détail le contact manométrique 20 en se référant à la figure 3, où l'on voit que l'interrupteur manométrique 20 comprend un boîtier en deux pièces 28, dont une extrémité est constituée par un élément de raccordement fileté 29, traversé par un orifice coaxial d'entrée haute pression 30.

Coaxial et adjacent à l'orifice d'entrée 30, on a un piston 32 qui est entouré par un ressort hélicoïdal 34, positionné par rapport au piston par une rondelle à épaulement de centrage 45.

Le piston 32 réagit au niveau de pression de l'air dans l'entrée haute pression 30, en se déplaçant axialement de manière à appuyer ou ne pas appuyer sur l'interrupteur à bouton poussoir 38, plus exactement sur le plongeur 36 de celui-ci.

La position du plongeur 36 de l'interrupteur à bouton poussoir 38 peut être ajustée au moyen d'un élément fileté 40 de réglage en hauteur de l'interrupteur. La sortie de l'interrupteur à bouton poussoir 38 est constituée par une paire de fils 42 qui sont les conducteurs d'un câble 21, que l'on a représenté sortant par la partie extrême droite de la figure 3, à travers l'ouverture prévue dans un capuchon 44. Ledit capuchon 44 comporte une chambre intérieure 47 qui, dans la réalisation préférée de l'invention, est entièrement époxydée pour obtenir une protection maximale des éléments composant l'interrupteur 20.

La rondelle torique 48 est utilisée pour assurer l'étanchéité à l'eau de l'interrupteur 20. La rondelle torique 49 assure la différence de pression qui agit sur le piston.

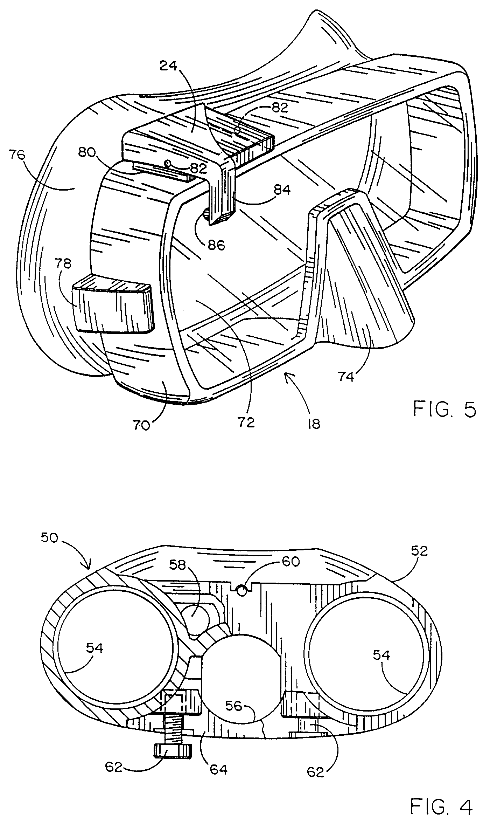

En se référant maintenant à la figure 4, on peut voir que l'émetteur 22 de la présente invention comprend un boîtier 50 qui se compose d'un coffret 52 et d'un couvercle 64. Dans le boîtier 50 de l'émetteur, sont prévus une paire de compartiments 54 pour des piles ainsi qu'un orifice 56 pour le passage du tuyau flexible et un orifice 58 pour le câble. Il est prévu également une paire de broches 60, sensibles à l'humidité, qui assurent automatiquement l'alimentation de l'émetteur 22 lorsque celui-ci est immergé. Quatre vis 62 assurent la fixation du couvercle 64 sur le coffret 52.

En se référant à la figure 5, on voit maintenant que le masque de plongée 18 de la présente invention comprend un corps 70, une plaque frontale 72, un cache-nez 74 et un revêtement d'étanchéité 76 plaqué sur le visage, ainsi qu'une boucle de fixation 78 pour le serre-nuque. En plus de ces éléments constituant un masque de plongée classique,il est prévu, dans la présente invention, un récepteur 24 qui est monté à l'extérieur du corps 70, sur la surface supérieure de celui-ci, fixé avec de la bande adhésive double face 80. Le récepteur 24 est pourvu a l'extérieur d'une paire de broches 82 sensibles à l'humidité, qui jouent le même rôle que les broches dans l'émetteur 22, et assurent l'alimentation du récepteur lorsque celui-ci est immergé dans l'eau. Le récepteur 24 est muni à l'extérieur d'un ensemble 84 orienté vers le bas, de sorte qu'il empiète sur la partie supérieure de la plaque frontale 72. Ledit ensemble comprend une paire de diodes électroluminescentes 86 qui fournissent une représentation visuelle indiquant l'état de la réserve d'air, normale ou inférieure à la normale, ainsi que cela va être décrit ci-dessous plus en détail.

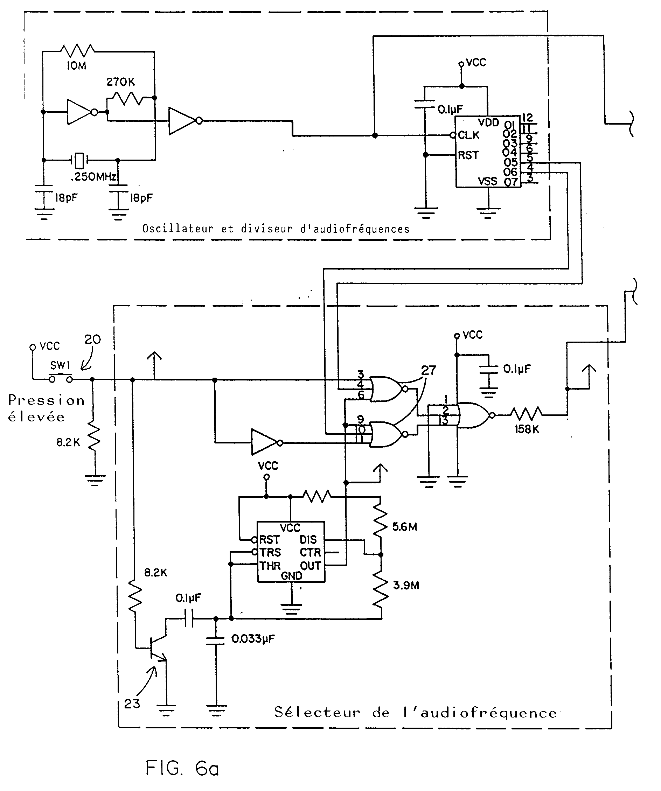

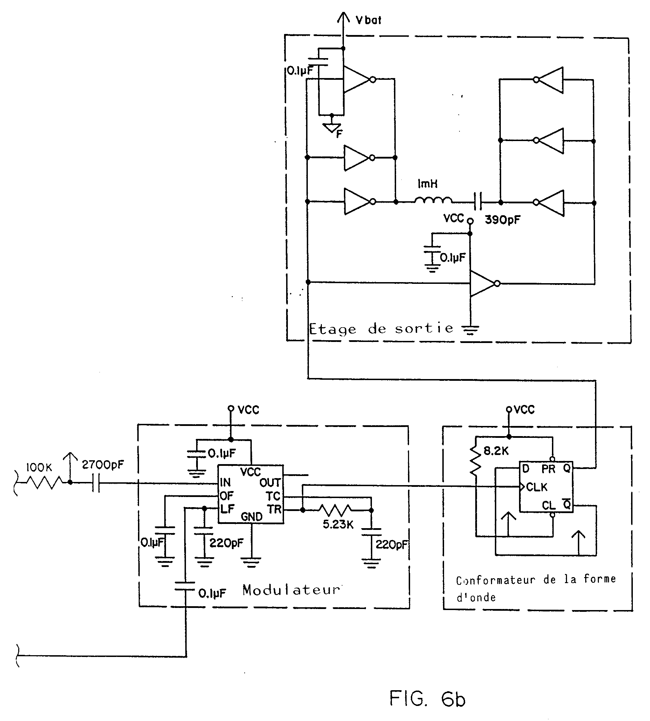

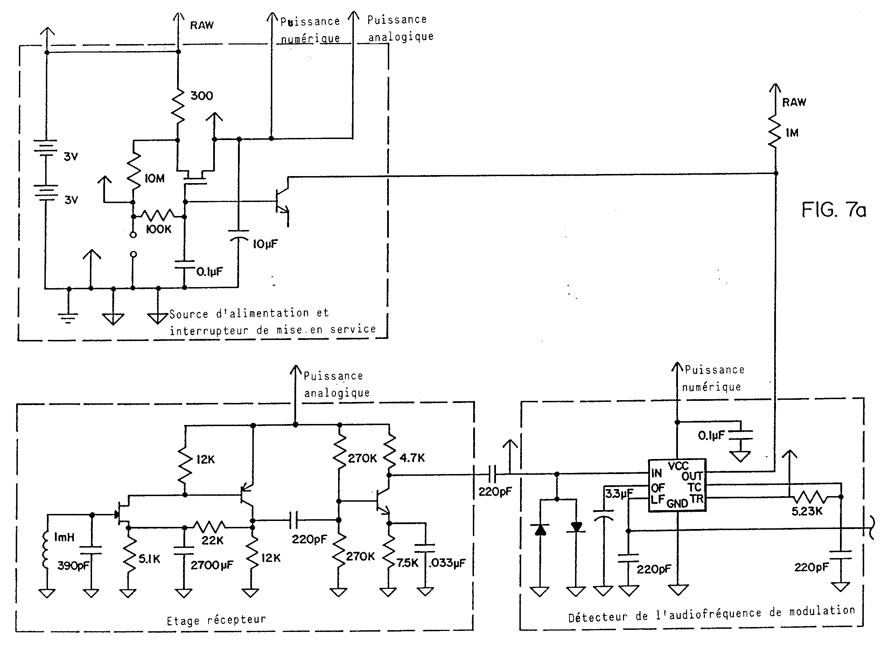

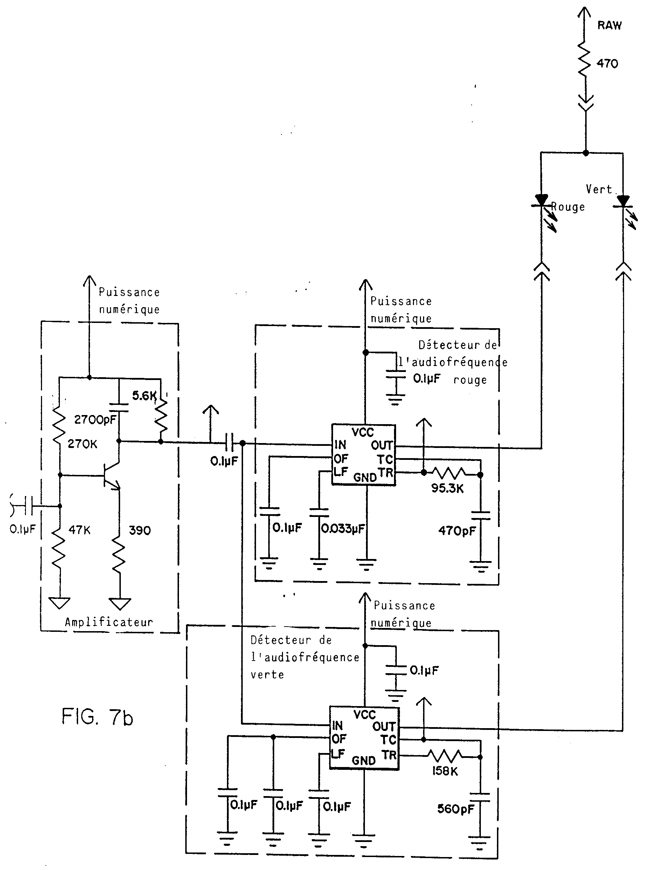

Nous allons nous référer maintenant aux figures 6 et 7 pour un exposé plus détaillé sur les conceptions électriques respectives de l'émetteur 22 et du récepteur 24. En commençant par la figure 6a, on peut voir que l'émetteur de la présente invention comprend un ensemble oscillateur-diviseur de fréquence, un sélecteur de fréquence, un modulateur, un conformateur de la forme d'onde et un étage de sortie. L'ensemble oscillateur-diviseur de fréquence comprend un oscillateur de 250 kHz avec les résistances et les capacités adéquates pour engendrer un signal oscillatoire à 250 kHz.

Ce signal oscillatoire est appliqué à la borne d'entrée CLK (horloge) d'un compteur d'ondulations binaire à sept étages dont deux sorties, respectivement Q5 et Q6, sont reliées au sélecteur de fréquences. La borne de sortie à 250 kHz est également reliée au modulateur représenté dans la figure 6b, c'est-à-dire, plus exactement, à la borne "IN" (entrée) d'une puce type LMC 568, circuit oscillant à blocage de phase, de faible puissance, telle que celle qui est vendue par la "National Semiconductor". Le modulateur est un circuit bouclé linéaire en amplitude avec blocage de phase, avec un oscillateur réglé par variation de la tension VCO linéaire, des détecteurs de phase équilibrés et une sortie de surveillance de la fréquence porteuse. Ce chip est habituellement utilisé comme détecteur de signaux obtenus par modulation ou par variations brusques de la fréquence, où une fréquence porteuse est détectée lorsque le circuit à blocage de phase est accroché à un signal d'entrée avec un écart pouvant atteindre plus ou moins 15 % de la fréquence porteuse. Dans la présente invention cependant, ce circuit oscillant intégré à blocage de phase est utilisé comme modulateur, en appliquant la fréquence porteuse, c'est-à-dire le signal oscillatoire à 250 kHz, à la borne d'entrée "IN" du circuit intégré et en appliquant l'audiofréquence de modulation à l'entrée du filtre pour faire varier efficacement la fréquence sensible à la tension VCO du circuit intégré en accord avec l'audiofréquence.

Deux signaux modulateurs à audiofréquences sont élaborés sur les sorties Q5 et Q6 du compteur binaire à sept étages prévu dans l'oscillateur et diviseur d'audiofréquence de la figure 6a. Ces deux signaux sont appliqués au sélecteur de fréquence représenté dans la partie inférieure de la figure 6a. La fonction du sélecteur de fréquence est double, à savoir, choisir l'une des deux audiofréquences, respectivement 3,9 et 7,8 kHz, et déterminer le cadencement du cycle de fonctionnement qui est commandé par un circuit minuteur intégré représenté dans le sélecteur de fréquence.

Le minuteur peut être du type par exemple LMC555CN.

La périodicité du minuteur, au niveau du sélecteur de fréquence, est déterminée par l'état de l'interrupteur 20 haute pression, qui est représenté schématiquement à l'entrée gauche du sélecteur de fréquence de la figure 6a. L'ouverture ou la fermeture de l'interrupteur 20 de pression détermine également laquelle des deux fréquences sera générée par le sélecteur de fréquence et appliquée au modulateur de la figure 6b.

Plus exactement, la position haute pression de l'interrupteur manométrique détermine si la constante de temps RC du minuteur est élevée ou faible selon l'état conducteur "ON" d'un transistor 23.

Quand le transistor 23 est dans l'état conducteur "ON", la constante de temps RC est quatre fois supérieure à celle du transistor 23 dans l'état bloqué "OFF".

Lorsque le transistor 23 est conducteur, la constante de temps RC est quatre fois plus grande que lorsque ce transistor est dans l'état bloqué. Entre ces deux états, on obtient donc des rythmes de cadencement dont le rapport est de quatre à un. L'état de l'interrupteur 20 détermine aussi laquelle des portes "NOR" 27 se trouve en état de réagir à l'audiofréquence appliquée sur son entrée. Dans la présente invention, les valeurs des éléments composant le sélecteur de fréquences ont été choisies de manière que le signal à 3,9 kHz, qui dans la présente invention correspond à un état satisfaisant de la réserve d'air, soit émis toutes les secondes et que le signal à 7,8 kHz, correspondant à une pression de réserve d'air trop basse, soit émis toutes les demi secondes. La seule justification de ces deux audiofréquences est qu'elles peuvent être distinguées l'une de l'autre dans le récepteur, ainsi qu'on va le décrire plus loin, de sorte que l'un des signaux n'allume que la diode électroluminescente rouge, tandis que l'autre n'allume que la diode électroluminescente verte. La manière de détecter séparément ces deux signaux, et de les distinguer l'un de l'autre, va être décrite plus loin, conjointement avec la figure 7.

L'audiofréquence choisie au moyen du sélecteur de la figure 6a est appliquée à l'entrée du filtre du circuit intégré modulateur de la figure 6b, afin de moduler le signal porteur 250 kHz, avec la fréquence de modulation appropriée correspondant à l'audiofréquence choisie. Le signal porteur, modulé à la fréquence désirée, est disponible sur la borne TR du modulateur de la figure 6b, qui est la borne de sortie de l'oscillateur interne VCO du chip-circuit intégré LMC568CM.

La sortie du modulateur est reliée à la borne d'entrée de l'horloge d'un circuit conformateur de la forme d'onde représenté dans le coin, en bas à droite dans la figure 6b. Le circuit conformateur est un chip univibrateur à circuit intégré du type D, tel qu'un modèle classique, le 74HC74. La borne de sortie Q de l'univibrateur flip-flop de la figure 6b est reliée à l'étage de sortie de l'émetteur qui comprend les éléments intermédiaires adéquates et un circuit résonnant avec une inductance de 1 millihenry et un condensateur de 390 picofarad (pF). Ledit circuit résonnant constitue une antenne d'émetteur à coefficient de surtension Q élevé (c'est-à-dire égal ou supérieur à 40), à bande passante étroite, qui engendre le champ électromagnétique adéquat pour la transmission de la fréquence porteuse modulée à 250 kHz, pour transmettre le signal de modulation choisi.

Le récepteur de la présente invention est représenté schématiquement dans les figures 7a et 7b. Il comprend un étage récepteur, un détecteur FM de l'audiofréquence, un amplificateur, une paire de décodeurs d'audiofréquences avec les deux diodes électroluminescentes LED correspondantes, ainsi qu'une source d'alimentation et un interrupteur à fermeture qui applique la tension d'alimentation nécessaire aux différents composants de l'ensemble récepteur des figures 7a et 7b.

L'étage récepteur, représenté en bas à gauche dans la figure 7a, comprend un circuit résonnant parallèle accordé, correspondant à celui de l'émetteur de la figure 6b, à savoir une inductance de 1 millihenry et un condensateur de 390 pF. La partie restante de l'étage récepteur comprend un premier étage amplificateur avec un FET transistor à effet de champ et des étages amplificateurs complémentaires adéquates pour délivrer l'amplitude de signal nécessaire pour le détecteur de l'audiofréquence de modulation FM, auquel est reliée, par un condensateur de couplage, la sortie de l'étage récepteur. Le détecteur de la fréquence de modulation FM comprend une paire de diodes limitant l'amplitude et un circuit bouclé de faible puissance à accrochage de phase, du type LMC568IC, qui est identique au chip circuit intégré, qui est utilisé dans le modulateur FM de l'émetteur de la présente invention, représenté dans la figure 6. Néanmoins, dans le récepteur, le circuit intégré à circuit à blocage de phase, de faible puissance, LMC568, est utilisé avec sa configuration normale pour éliminer le signal porteur, c'est-à-dire la fréquence porteuse à 250 kHz, en conservant la fréquence de modulation introduite au départ, afin d'obtenir l'un ou l'autre des signaux à audiofréquences possibles. Le signal à audiofréquence, est appliqué à un amplificateur représenté dans la partie de droite de la figure 7b, puis à une paire de décodeurs d'audiofréquences. L'un de ces décodeurs est conçu pour détecter la présence d'un signal à 7,8 kHz et l'autre pour détecter la présence d'un signal à 3,9 kHz. Le détecteur 7,8 kHz est celui qui est représenté au centre de la figure 7b, le décodeur 3,9 kHz est celui qui est représenté dans la partie inférieure de la figure 7b. Chacun d'eux utilise un circuit intégré IC détecteur de signal à audiofréquence de faible puissance du type LMC567, tel que celui fourni par la National Semiconductor. Chacun de ces décodeurs comporte un détecteur de phase et un oscillateur réglé par variation de la tension VCO pour former une boucle oscillatrice à blocage de phase qui se synchronise avec un signal d'entrée dont, la fréquence est comprise dans la plage de réglage du VCO. Lorsque la boucle oscillatrice est ainsi fermée et que l'amplitude du signal d'entrée est supérieure à une valeur de seuil préréglée intérieurement, un interrupteur de mise à la terre est actionné, connecté à la broche de sortie correspondant à l'une des deux LED, à la rouge ou à la verte, pour communiquer au plongeur la couleur adéquate, indiquant l'état de sa réserve d'air.

Lorsque le décodeur du signal "rouge" détecte la présence de la fréquence 7,8 kHz, il met, à la terre, sa broche de sortie, autorisant ainsi le passage du courant à travers la diode électroluminescente LED rouge, représentée en haut à droite, dans le coin de la figure 7b.

De même, lorsque c'est le décodeur du signal "vert" qui détecte la présence de la fréquence 3,9 kHz, c'est sa broche de sortie, qui est mise à la terre, autorisant le passage du courant à travers la diode luminescente LED verte, également représentée en haut, à l'extrême droite de la figure 7b. On voit ainsi que la différence entre les audiofréquences est là uniquement pour fournir un moyen de distinguer l'un de l'autre les deux signaux à audiofréquence engendrés par l'émetteur, selon la position de l'interrupteur manométrique 20, représentatifs par conséquent de l'état de la pression d'air à l'intérieur de la bouteille d'air 12 du plongeur, représentée dans les figures 1 et 2. En plus de la différence de couleur entre les deux "LED", le plongeur distingue, l'un de l'autre, les deux états possibles de la pression de sa réserve d'air par les rythmes différents des allumages successifs correspondants qui indiquent eux aussi au plongeur l'état de sa réserve d'air, rythmes déterminés par les deux périodicités différentes engendrées par le rythmeur du sélecteur d'audiofréquence de la figure 6a, ainsi qu'on l'a décrit précédemment. Ainsi, la configuration représentée dans la figure 7b produit un éclat avec la LED verte toutes les deux secondes tant que l'état de la réserve d'air est normal, et un éclat de lumière avec la LED rouge chaque demi-seconde, indiquant une pression trop basse de la réserve d'air, ainsi qu'on la décrit précédemment.

Il est pratiquement impossible que le plongeur ignore cette variation simultanée de la couleur et du cadencement des éclats de lumière, visibles directement à travers le masque de plongée 18, ainsi qu'on l'a expliqué précédemment dans la description de la figure 5.

On peut comprendre maintenant que ce qui a été décrit ci-dessus comprend un système d'alarme en cas de pression insuffisante de la réserve d'air, pour les plongeurs en scaphandre autonome, dans lequel un interrupteur manométrique et un émetteur électromagnétique sont disposés sur le réservoir d'air à haute pression du plongeur en scaphandre autonome ou à proximité dudit réservoir et qu'un récepteur électromagnétique correspondant est disposé sur le masque du plongeur. Un ensemble, s'étendant à partir du récepteur, comprend une paire d'indicateurs lumineux avec deux diodes électroluminescentes LED, de deux couleurs différentes qui clignotent à des fréquences elles aussi différentes, selon la position du contact manométrique réagissant à la pression de l'air contenu dans le réservoir d'air du plongeur.

La présente invention élimine ainsi les défauts, énumérés précédemment, de l'état antérieur de la technique.

Elle fournit un système d'alarme, en cas d'insuffisance de la réserve d'air, d'un coût modéré, de grande fiabilité, à faible consommation d'énergie, qui supprime la nécessité d'un câble de liaison, selon l'état antérieur de la technique, entre le réservoir d'air et le masque facial du plongeur.

Autrement, un tel câble pourrait perturber considérablement la liberté de mouvements du plongeur et constituer un risque, au détriment des avantages procurés par un tel système d'alarme en cas de baisse excessive de la réserve d'air. On décrit un système inédit unique de transmission et de réception électromagnétique basé sur l'induction électromagnétique entre une antenne d'émission à coefficient de surtension Q élevé et une antenne de réception à coefficient Q élevé, réalisées sous la forme de circuits oscillants LC qui ont été décrits ci-dessus.

L'une des innovations de la présente invention consiste dans l'utilisation de la modulation de fréquence et dans l'utilisation d'audiofréquences de modulation distinctes qui produisent l'un ou l'autre des deux signaux pour actionner l'une au l'autre des deux LED de différente couleur et ceci avec des rythmes d'activation différents. Une modification simultanée de la couleur et de la fréquence de clignotement informe le plongeur de façon quasicertaine du changement d'état de sa réserve d'air lorsque celle-ci a été réduite suffisamment pour tomber en dessous d'une valeur de seuil qui est surveillée par un contact manométrique fixé à une valve, sur la bouteille d'air.

Avec les informations données par le demandeur dans le présent document, les lecteurs versés dans la technique dont relève la présente invention, vont se rendre compte des modifications et adjonctions qui pourraient y être apportées.

C'est ainsi que le modèle spécifique d'émetteur et de récepteur à couplage électromagnétique, décrit dans la présente invention, peut être modifié pour utiliser d'autres schémas pour actionner l'une ou l'autre des deux "LED" différentes, ainsi que d'autres méthodes pour la transmission de l'énergie électromagnétique de l'émetteur au récepteur. Par ailleurs, des configurations mécaniques différentes peuvent être utilisées pour l'émetteur et pour le récepteur, ainsi que pour la disposition du récepteur dans le champ visuel du plongeur, sans porter atteinte au principe général de la présente invention ni aux avantages qui en découlent. Par conséquent, toutes modifications et adjonctions de ce genre sont considérées comme incluses dans le cadre de l'invention.

## Revendications

1. Système d'alarme à l'insuffisance de la pression d'air pour utilisation par les plongeurs en scaphandre autonome (10),
caractérisé par le fait
que ledit système comprend :
- un détecteur de pression prévu pour le raccordement à un réservoir d'alimentation en air (12) et réagissant à la diminution de la quantité d'air contenue dans ledit réservoir (12), en dessous d'un seuil prédéterminé, pour élaborer une manifestation électrique de celle-ci ;
- un émetteur d'énergie électromagnétique (22) raccordé audit détecteur pour l'élaboration d'un premier signal indiquant que la quantité d'air dans ledit réservoir (12) est supérieure à ladite valeur de seuil et un deuxième signal indiquant que ladite quantité est inférieure à la valeur de seuil ; et
- un récepteur d'énergie électromagnétique (24) prévu pour être disposé adjacent à un masque de plongée (18) et comportant un circuit pour la réception des deux signaux précités lorsque le masque (18) est en place sur le visage d'un plongeur, ledit circuit comportant au moins un dispositif d'affichage disposé dans le champ visuel dudit masque (18), et produisant une première manifestation visuelle en réponse audit premier signal et une deuxième manifestation visuelle différente, dans le dispositif d'affichage en réponse audit deuxième signal, lesdites manifestations visuelles pouvant être distinguées sans peine l'une de l'autre.

2. Système selon la revendication 1, caractérisé par le fait
que ledit émetteur (22) et ledit récepteur (24) comprennent chacun un circuit accordé à bande passante étroite, avec un inducteur , respectivement pour l'émission et pour la réception, en plongée, d'un signal à fréquence prédéterminée.

3. Système selon la revendication 1, caractérisé par le fait
que ledit premier signal comprend une fréquence porteuse modulée par une première audiofréquence et que ledit deuxième signal comprend ladite fréquence porteuse modulée par une deuxième audiofréquence, lesdits premier et deuxième signaux étant différenciés par leurs audiofréquences et par leurs rythmes de cadencement respectifs.

4. Système selon la revendication 1, caractérisé par le fait
que ledit dispositif d'affichage comprend deux diodes électroluminescentes (86) de couleurs différentes.

5. Système selon la revendication 1, caractérisé par le fait
que ladite première manifestation visuelle consiste en une lumière clignotante identifiée par une première couleur et par un premier rythme de cadencement, tandis que ladite deuxième manifestation visuelle est identifiée par une deuxième couleur et un deuxième rythme de cadencement, ledit deuxième rythme de cadencement ayant une fréquence égale au double, au moins, de ladite première fréquence de cadencement.

6. Système d'équipement de plongée en scaphandre autonome, du type comprenant un réservoir d'alimentation en air (12), un détendeur d'air primaire connecté au réservoir (12) et un masque de plongée (18) avec une plaque de verre faciale, caractérisé par le fait
qu'un capteur de pression d'air est connecté audit détendeur primaire qui réagit à la pression de l'air contenu dans ledit réservoir en actionnant un interrupteur dans un certain sens lorsque ladite pression d'air est en dessous d'un seuil prédéterminé et actionnant ledit interrupteur dans l'autre sens lorsque ladite pression d'air est supérieure à la valeur de seuil;
qu'un émetteur (12) est connecté électriquement audit capteur, pour émettre un premier et un deuxième signal électromagnétique correspondant respectivement auxdites activations distinctes de l'interrupteur ; et
qu'un récepteur (24) communique sans fil de liaison avec ledit émetteur (22) pour recevoir lesdits premier et deuxième signaux électromagnétiques et activer respectivement le premier ou le deuxième affichage par clignotement lumineux ; ledit récepteur (24) étant disposé adjacent audit masque de plongée (18), et actionnant lesdits affichages en regard de ladite plaque faciale en verre (72).

7. Système selon la revendication 6, caractérisée par le fait
que ledit premier signal comprend une fréquence porteuse modulée par une première audiofréquence et que ledit deuxième signal comprend ladite fréquence porteuse modulée par une deuxième audiofréquence, lesdites première et seconde audiofréquences étant différentes et étant cadencées avec des rythmes différents.

8. Système selon la revendication 6, caractérisé par le fait
que lesdits affichages clignotants ont des couleurs respectives différentes.

9. Système selon la revendication 6, caractérisé par le fait
que lesdits affichages clignotants ont des rythmes de cadencement allumage-extinction différents.

10. Système selon la revendication 6, caractérisée par le fait
que chacun desdits signaux électromagnétiques comprend une fréquence porteuse choisie entre au moins deux fréquences de modulation possibles, et
que ledit émetteur (22) comprend un sélecteur d'audiofréquence pour choisir l'audiofréquence modulatrice correspondant à l'action qui s'exerce sur l'interrupteur, ledit récepteur comprenant deux circuits décodeurs d'audiofréquences pour faire clignoter la première ou la deuxième diode LED, selon l'audiofréquence modulant ladite fréquence porteuse.

11. Système d'alarme visuelle pour prévenir le plongeur que la situation est potentiellement dangereuse, alors qu'il est en plongée, caractérisé par le fait qu'il comprend :
- un capteur de situation réagissant à une situation dangereuse de manière à produire un effet électrique ;
- un émetteur (22) et un récepteur (24), ledit émetteur (22) étant relié électriquement audit capteur pour élaborer le rayonnement électromagnétique convenable, choisi parmi au moins deux rayonnements électromagnétiques distincts, selon les conditions observées au moyen dudit capteur ; ledit récepteur (24) étant positionné, par rapport audit émetteur (22), de manière à recevoir lesdits rayonnements et pour activer un dispositif d'affichage en accord avec le rayonnement reçu dudit émetteur (22);
- un dispositif d'affichage, en communication, électriquement, avec ledit récepteur (24), et comportant au moins une source génératrice de différentes formes de signaux lumineux, selon celui desdits rayonnements électromagnétiques qui parvient audit récepteur (24), ladite source génératrice de signaux lumineux étant disposée dans le champ visuel du plongeur, en regard du visage de celui-ci, pour assurer l'identification par le plongeur desdits signaux lumineux et de ladite situation dangereuse ; et
- des interrupteurs actionnés par l'eau, pour activer automatiquement ledit émetteur (22) et ledit récepteur (24) lorsque ledit système est en immersion.

12. Système selon la revendication 11, caractérisé par le fait
que ledit récepteur (24) et ledit dispositif d'affichage sont montés sur un masque de plongée (18).

13. Système selon la revendication 11, caractérisé par le fait
que ledit récepteur (24) et ledit émetteur (22) ont chacun un circuit résonnant parallèle, avec une bobine magnétique et un condensateur, accordé sur une fréquence adéquate prédéterminée pour une transmission électromagnétique, dudit émetteur (22) audit récepteur (24), au moyen de signaux véhiculés par un champ magnétique variable en fonction du temps.

14. Système selon la revendication 13, caractérisé par le fait
que chacun desdits récepteur (24) et émetteur (22) comprend un circuit résonnant parallèle, inductif et capacitif utilisant ladite bobine magnétique et ayant un coefficient de surtension Q au moins égal à 40.

15. Système selon la revendication 13 caractérisé par le fait
que ladite fréquence est de l'ordre de 250 kHz.

16. Système d'alarme, pour plongeur en scaphandre autonome, caractérisé par le fait
qu'il comprend :
- un capteur surveillant l'état d'un paramètre critique ;
- un dispositif d'alarme monté adjacent à la tête du plongeur pour attirer l'attention de celui-ci ; et
- une combinaison d'émetteur (22) et de récepteur (24), réagissant au comportement dudit capteur, pour élaborer une indication d'alarme, au voisinage de la tête du plongeur justifiée par l'état dudit paramètre critique, ladite combinaison émetteurrécepteur comportant des bobines inductives adaptées en fréquence, pour la transmission électromagnétique dudit émetteur (22) audit récepteur (24) au moyen d'un champ magnétique variant en fonction du temps.
